# EUROPÄISCHE PATENTSCHRIFT

(11) **EP 4 445 442 B1**
(45) Veröffentlichungstag und Bekanntmachung des Hinweises auf die Patenterteilung: **29.04.2026**
(21) Anmeldenummer: 22822330.1
(22) Anmeldetag: 23.11.2022
(51) Int. Cl.: H01M 10/0563, H01M 10/48, H01M 10/52, H01M 50/392

(54) **BATTERIESPEICHER MIT EINER SICHERHEITSVORRICHTUNG SOWIE VERFAHREN ZUM AUSLÖSEN DER SICHERHEITSVORRICHTUNG**
BATTERY STORAGE DEVICE WITH A SAFETY DEVICE, AND METHOD FOR TRIGGERING THE SAFETY DEVICE
ACCUMULATEUR DE BATTERIE COMPRENANT UN DISPOSITIF DE SÉCURITÉ ET PROCÉDÉ DE DÉCLENCHEMENT DU DISPOSITIF DE SÉCURITÉ

(30) Priorität: 10.12.2021 DE 102021132742
(43) Veröffentlichungstag der Anmeldung: 16.10.2024
(73) Patentinhaber: Bayerische Motoren Werke Aktiengesellschaft, 80809 München (DE)
(72) Erfinder: JUNG, Roland, 80999 München (DE); WOEHRLE, Thomas, 80637 München (DE); SCHARNER, Sebastian, 82299 Türkenfeld (DE); ADAM, Alexander, 80803 München (DE)
(86) Internationale Anmeldenummer: PCT/EP2022/083018
(87) Internationale Veröffentlichungsnummer: WO 2023/104523

(56) Entgegenhaltungen:
- EP-A1- 3 734 724
- WO-A1-2014/077536
- WO-A1-2020/065035
- JP-A- 2003 036 883

## Beschreibung

Die vorliegende Erfindung betrifft einen Batteriespeicher mit einer Sicherheitsvorrichtung und ein Verfahren zum Auslösen der Sicherheitsvorrichtung.

Elektrochemische Zellen sind in vielen technischen Gebieten von großer Bedeutung. Beispielsweise werden elektrochemische Zellen häufig für mobile Anwendungen eingesetzt wie beispielsweise für den Betrieb von Laptops, eBikes oder Mobiltelefonen. Ein Vorteil von elektrochemischen Zellen besteht darin, dass diese seriell bzw. parallel miteinander verschaltet werden können, um Batterien mit einer höheren Energie zu bilden. Derartige Batterien können in einem sogenannten Batteriespeicher zusammengefasst werden und sind unter anderem auch für Hochvoltanwendungen geeignet. Beispielsweise können Batteriespeicher den elektrischen Antrieb von Fahrzeugen ermöglichen oder als stationäre Energiespeicher genutzt werden.

Im Folgenden wird der Begriff "elektrochemische Zelle" synonym für alle im Stand der Technik gebräuchlichen Bezeichnungen für wieder aufladbare galvanische Elemente verwendet, wie beispielsweise Zelle, Batterie, Batteriezelle, Akkumulator, Batterieakkumulator und Sekundärbatterie.

Eine elektrochemische Zelle ist in der Lage, beim Entladevorgang Elektronen für einen externen Stromkreis zur Verfügung zu stellen. Umgekehrt kann eine elektrochemische Zelle beim Ladevorgang mittels eines externen Stromkreises durch die Zufuhr von Elektronen geladen werden.

Eine elektrochemische Zelle hat mindestens zwei verschiedene Elektroden, eine positive (Kathode) und eine negative Elektrode (Anode). Beide Elektroden stehen in Kontakt mit einem Separator, der ein elektrischer Isolator ist. Als Stand der Technik kommt zum Beispiel ein poröser Polyolefin-Separator zum Einsatz, der mit einer flüssigen Elektrolytzusammensetzung getränkt ist. Der Separator trennt die beiden Elektroden räumlich voneinander und verbindet beide Elektroden ionenleitend miteinander.

Die am gebräuchlichsten verwendete elektrochemische Zelle ist die Lithium-Ionen-Zelle, auch Lithiumionen-Batterie genannt. Lithiumionen-Zellen aus dem Stand der Technik weisen typischerweise eine zusammengesetzte Anode auf, die sehr häufig aus einem kohlenstoffbasierten Anodenaktivmaterial besteht, typischerweise graphitischer Kohlenstoff, welcher in der Regel mit einem Elektrodenbinder auf eine metallische Kupferträgerfolie beschichtet wird. In der Regel besteht die Komposit-Kathode aus einem positiven Kathodenaktivmaterial, beispielsweise einem Schichtoxid, einem Binder und einem elektrischen Leitfähigkeitsadditiv, welche z. Bsp. auf einer gewalzten Aluminium-Kollektor-Folie aufgetragen. sind. Das Schichtoxid besteht sehr häufig aus LiCoO₂ oder LiNi_{1/3}Mn_{1/3}Co_{1/3}O_{2.}.

Typischerweise weisen Lithiumionen-Batterien eine flüssige Elektrolytzusammensetzung auf, die beim Lade- und Entladevorgang den Ladungsausgleich zwischen der Kathode und der Anode gewährleistet. Der dazu nötige Stromfluss wird durch den Ionentransport eines Leitsalzes in der Elektrolytzusammensetzung erreicht. Bei Lithiumionen-Zellen ist das Leitsalz ein Lithium-Leitsalz, (z. Bsp. LiPF₆, LiBF₄) und die dissoziierten Lithiumionen bewegen sich im elektrischen Feld zwischen den Elektroden.

Neben dem Lithium-Leitsalz enthalten Elektrolytzusammensetzungen ein Lösungsmittel, welches eine Dissoziation des Leitsalzes sowie eine ausreichende Mobilität der Lithiumionen ermöglicht. Aus dem Stand der Technik sind flüssige organische Lösungsmittel bekannt, die aus einer Auswahl von linearen und zyklischen Dialkylcarbonaten bestehen. In der Regel werden Mischungen von Ethylencarbonat (EC), Dimethylcarbonat (DMC), Diethylcarbonat (DEC), Propylencarbonat (PC) und Ethylmethylcarbonat (EMC) verwendet. Die hier genannten Lösungsmittel weisen jeweils einen spezifischen Stabilitätsbereich auf, in welchem diese stabil unter einer gegebenen Zellspannung arbeiten. Dieser Bereich ist auch als Spannungsfenster bekannt. Im Spannungsfenster kann die elektrochemische Zelle während des Betriebs stabil laufen. Bei einer Annäherung an die Grenzen des Spannungsfensters findet eine elektrochemische Oxidation oder Reduktion der Bestandteile der Elektrolytzusammensetzung statt. Man ist daher bestrebt, Elektrolyten zu verwenden, die eine höhere Stabilität gegenüber verschiedenen Zellspannungen aufweisen.

Eine Weiterentwicklung von Lithiumionen-Batterien mit einem organischen Elektrolyten stellen daher Lithiumionen-Batterien mit einem anorganischen Elektrolyten auf Basis des Lösemittels Schwefeldioxid dar. Im Stand der Technik sind verschiedene Ansätze für stabile Elektrolytzusammensetzungen auf Basis von Schwefeldioxid bekannt.

Die EP 1 201 004 B1 offenbart eine wieder aufladbare elektrochemische Zelle mit einem auf Schwefeldioxid basierenden Elektrolyten. Schwefeldioxid ist hierbei nicht als Zusatzstoff zugesetzt, sondern stellt den Hauptbestandteil als Lösemittel für das Leitsalz der Elektrolytzusammensetzung dar. Daher soll es zumindest teilweise die Mobilität der Lithium-Ionen des Leitsalzes gewährleisteten, welche den Ionentransport zwischen den Elektroden bewirken. In den vorgeschlagenen Zellen wird Lithiumtetrachloroaluminat (LiAlCl₄) als lithiumhaltiges Leitsalz in Kombination mit einem Kathodenaktivmaterial aus einem Übergangs-Metalloxid verwendet, insbesondere einer Interkalationsverbindung wie beispielsweise Lithiumkobaltoxid (LiCoO₂). Durch die Zugabe eines Salzzusatzes, beispielsweise eines Alkalihalogenids wie Lithiumfluorid, Natriumchlorid oder Lithiumchlorid, zur schwefeldioxidhaltigen Elektrolytzusammensetzung wurden funktionierende und wieder aufladbare Zellen erhalten.

Die EP 2 534 719 B1 beschreibt eine wieder aufladbare Lithium-Batteriezelle mit einem auf Schwefeldioxid basierenden Elektrolyten in Kombination mit Lithiumeisenphosphat (LFP) als Kathodenaktivmaterial. Als bevorzugtes Leitsalz wurde Lithiumtetrachloroaluminat in der Elektrolytzusammensetzung verwendet. In Versuchen mit Zellen auf Grundlage dieser Komponenten konnte eine hohe elektrochemische Beständigkeit der Zellen nachgewiesen werden.

Die WO 2015/043573 A2 beschreibt eine wieder aufladbare elektrochemische Batteriezelle mit einem Gehäuse, einer positiven Elektrode, einer negativen Elektrode und einem Elektrolyt, der Schwefeldioxid und ein Leitsalz enthält, wobei mindestens eine der Elektroden einen Binder enthält, ausgewählt aus der Gruppe bestehend aus Binder A, welcher aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus seiner Kombination daraus aufgebaut ist, und Binder B, welcher aus einem Polymer besteht, das auf monomeren Styrol- und Butadien-Struktureinheiten basiert oder einer Mischung aus Binder A und B.

In der WO 2021/019042 A1 werden wieder aufladbare Batteriezellen mit einem aktiven Metall, einem Schichtoxid als Kathodenaktivmaterial und einem schwefeldioxidhaltigen Elektrolyten beschrieben. Aufgrund der schlechten Löslichkeit vieler gängiger Lithium-Leitsalze in Schwefeldioxid wurde in den Zellen ein Leitsalz der Formel M⁺[Z(OR)₄]⁻ verwendet, worin M ein Metall darstellt, das ausgewählt ist aus der Gruppe bestehend aus Alkalimetall, Erdalkalimetall und einem Metall der 12. Gruppe des Periodensystems, und R ein Kohlenwasserstoffrest ist. Die Alkoxygruppen -OR sind jeweils einbindig an das Zentralatom gebunden, welches Aluminium oder Bor sein kann. In einer bevorzugten Ausführungsform enthalten die Zellen ein perfluoriertes Leitsalz der Formel Li⁺[Al(OC(CF₃)₃)ₐ]⁻. Zellen bestehend aus den beschriebenen Komponenten zeigen in experimentellen Studien eine stabile elektrochemische Leistung. Zudem weisen die Leitsalze, insbesondere das perfluorierte Anion, eine überraschende Hydrolysestabilität auf. Ferner sollen die Elektrolyte bis zu einem oberen Potential von 5,0 V oxidationsstabil sein. Es wurde weiter gezeigt, dass Zellen mit den offenbarten Elektrolyten bei tiefen Temperaturen von bis zu -41°C entladen bzw. geladen werden können.

Ferner offenbart die nicht vorveröffentlichte deutsche Patentanmeldung Nr. 10 2021 118 811.3 eine flüssige Elektrolytzusammensetzung auf Basis von Schwefeldioxid für eine elektrochemische Zelle. Die Elektrolytzusammensetzung umfasst die folgenden Komponenten: A) Schwefeldioxid; B) mindestens ein Salz, wobei das Salz einen anionischen Komplex mit mindestens einem zweizähnigen Liganden enthält. Das Gegenion des anionischen Komplexes ist ein Metallkation, ausgewählt aus der Gruppe bestehend aus Alkalimetallen, Erdalkalimetallen und Metallen der 12. Gruppe des Periodensystems. Das Zentralion Z des Komplexes ist ausgewählt aus der Gruppe bestehend aus Aluminium und Bor. Der zweizähnige Ligand bildet mit dem Zentralion Z und mit zwei an dem Zentralion Z und den Brückenrest gebundenen Sauerstoffatomen einen Ring aus, wobei der Ring eine durchgehende Sequenz von 2 bis 5 Kohlenstoffatomen enthält. Darüber hinaus wurde eine elektrochemische Zelle, insbesondere eine Lithiumionen-Zelle, mit der oben genannten Elektrolytzusammensetzung vorgeschlagen.

Darüber hinaus sind Zellen mit einem Elektrolyten auf Basis von Schwefeldioxid aus der EP 3 703 161 A1, EP 2 227 838 B1, EP 2 742 551 B1, EP 3 771 011 A2, WO 2005 / 031908 A2 und WO 2014 / 121803 A1 bekannt, auf die hier Bezug genommen wird.

Die EP 3 734 724 A1 offenbart eine wiederlaufladbare Batteriezelle mit einem Elektrolyten, der auf Schwefeldioxid basiert.

Die JP 2003 036883 A beschreibt eine Natrium-Schwefel-Batterie, die einen Absorber für gasförmiges Schwefeldioxid umfasst, um ein Austreten von Schwefeldioxid aus der Batterie zu verhindern.

Aus der WO 2020/065035 A1 ist ein Verfahren zur Neutralisierung oder Reduktion von Gerüchen oder Gasen, beispielsweise gasförmigem Schwefeldioxid, bekannt, wobei eine Zusammensetzung zum Einsatz kommt, die ein oder mehrere hochveresterte und/oder hochmethylierte Pektine und wenigstens eine organische Säure oder deren Salze umfasst.

WO2014/077536 A1 offenbart einen Batteriespeicher, der eine Sicherheitsvorrichtung mit einer Dosiervorrichtung aufweist, wobei die Sicherheitsvorrichtung ein Additiv zum Neutralisieren von Gasen im Innenraum des Speichergehäuses umfasst.

Im Falle eines mechanischen, elektrischen oder thermischen Defekts der Batteriezellen, insbesondere von Lithiumionen-Zellen mit einer Elektrolytzusammensetzung auf Basis von Schwefeldioxid, kann es zu einer Zellöffnung und damit zur Freisetzung von Elektrolytbestandteilen aus der Zelle kommen, insbesondere von gasförmigen Elektrolytbestandteilen wie Schwefeldioxid.

Der Erfindung liegt die Aufgabe zugrunde, bei einer solchen Beschädigung einer Zelle mit einem Elektrolyten auf Basis von Schwefeldioxid, einen Übertritt des Elektrolyten in die Umgebung zu verhindern.

Die Aufgabe wird erfindungsgemäß gelöst durch einen Batteriespeicher mit einer Sicherheitsvorrichtung und wenigstens einer Batteriezelle nach Anspruch 1.

Vorteilhafte Ausführungsformen des erfindungsgemäßen Batteriespeichers sind in den Unteransprüchen und den Figuren angegeben, die wahlweise miteinander kombiniert werden können.

Erfindungsgemäß wird die Aufgabe gelöst durch einen Batteriespeicher mit einem Speichergehäuse und wenigstens einer Batteriezelle, die in einem Innenraum des Speichergehäuses angeordnet ist, und einen Elektrolyten auf Basis von Schwefeldioxid enthält, wobei der Batteriespeicher eine Sicherheitsvorrichtung mit einer Dosiervorrichtung aufweist, die ein schaumbildendes Additiv umfasst und dazu eingerichtet ist, aus dem schaumbildenden Additiv einen Schaum zum Neutralisieren des Elektrolyten zu erzeugen und den Schaum im Innenraum des Speichergehäuses freizusetzen.

Der Grundgedanke der Erfindung besteht darin, dass im Falle eines mechanischen, thermischen oder elektrischen Defekts einer Zelle der vorgeschlagene Batteriespeicher eine Sicherheitsvorrichtung aufweist, die einen aus einer Zelle austretenden Elektrolyten auf Basis von Schwefeldioxid durch das Freisetzen eines Schaums neutralisiert bzw. bindet.

Somit kann der technische Vorteil erzielt werden, dass der austretende Elektrolyt durch die große Oberfläche des Schaums schnell und sicher absorbiert und auf einfache Weise neutralisiert bzw. gebunden werden kann.

Unter Neutralisation des Elektrolyten wird an dieser Stelle eine chemische Neutralisation verstanden, welche die Elektrolytbestandteile, insbesondere Schwefeldioxid, in chemisch beständigere und weniger toxische Verbindungen überführt.

Darüber hinaus ergibt sich gleichzeitig der Vorteil, dass die Neutralisation des Elektrolyten bereits im Innenraum des Speichergehäuses stattfindet. Da das Speichergehäuse insbesondere flüssigkeitsdicht ausgeführt ist, verbleiben nach dem Neutralisieren der Schaum, der Elektrolyt und sonstige Bestandteile im Batteriespeicher. Das Speichergehäuse stellt daher eine definierte und räumlich begrenzte Reaktionskammer bereit, in der unter kontrollierten Bedingungen die chemische Neutralisation durchgeführt werden kann. Vorteilhafterweise kann nach Beendigung der Neutralisation der Batteriespeicher einzeln entsorgt oder einem Recycling-Prozess zugeführt werden.

Der technische Vorteil bei der Verwendung eines Schaums besteht insbesondere darin, dass der freigesetzte Schaum den austretenden Elektrolyten fixieren kann. Einzelne Bestandteile des Elektrolyten können sich sorptiv an die Blasenhaut des Schaums anlagern und sind somit an dem Schaum gebunden. Ebenso können Elektrolytbestandteile in den Blasen des Schaums eingelagert werden. In beiden Fällen kann der austretende Elektrolyt in seiner Bewegung eingeschränkt und schnell im Innenraum des Speichergehäuses fixiert werden. Darüber hinaus kann der so fixierte Elektrolyt aufgrund der chemischen Beschaffenheit des Schaums selbst neutralisiert werden. Genauer gesagt kann der Elektrolyt mit den Schaumbestandteilen eine chemische Reaktion eingehen, wodurch der Elektrolyt neutralisiert und in chemisch beständigere Verbindungen überführt werden kann. Da der Schaum den Elektrolyten auch gleichzeitig fixiert, kann eine besonders vollständige und effiziente Neutralisation des Elektrolyten stattfinden.

Der vorgeschlagene Batteriespeicher ist vorzugsweise in einem Fahrzeug angeordnet und dient dem elektrischen Antrieb desselben. Selbstverständlich können auch mehrere Batteriespeicher in einem solchen Fahrzeug angeordnet sein. Der erfindungsgemäße Batteriespeicher ist nicht auf mobile Anwendungen wie Fahrzeuge beschränkt und kann auch für den stationären Betrieb genutzt werden. Beispielsweise kann der erfindungsgemäße Batteriespeicher zum Speichern von Energie aus Solaranlagen und Windparks verwendet werden.

Im Sinne der Erfindung ist mit einem Batteriespeicher ein Speichergehäuse gemeint, in dessen Innenraum wenigstens eine Batteriezelle angeordnet ist, bevorzugt mehrere Batteriezellen. Die Batteriezellen können in dem Speichergehäuse miteinander verschaltet sein, um eine höhere Energie bereitzustellen. Unter Batteriezelle wird eine elektrochemische Zelle mit einem Elektrolyten auf Basis von Schwefeldioxid verstanden. Vorzugsweise ist die Batteriezelle eine Lithium-Ionen-Zelle.

Die Erfindung ist in Bezug auf die Elektrolytzusammensetzung auf Basis von Schwefeldioxid nicht weiter eingeschränkt. Es können daher alle im Stand der Technik üblichen Elektrolytzusammensetzungen auf Basis von Schwefeldioxid verwendet werden.

Insbesondere wird unter einem Elektrolyten auf Basis von Schwefeldioxid eine flüssige Elektrolytzusammensetzung verstanden, die als Bestandteil Schwefeldioxid enthält. Das Schwefeldioxid kann in der Elektrolytzusammensetzung flüssig, gasförmig oder gebunden in einem Komplex vorliegen.

Geeignete Beispiele für derartige Elektrolytzusammensetzungen sind aus der EP 1 201 004 B1, EP 2 534 719 B1, WO 2015/043573 A2, WO 2021/019042 A1, EP 3 703 161 A1, EP 2 227 838 B1, EP 2 742 551 B1, EP 3 771 011 A2, WO 2005 031908 A2 und der WO 2014 121803 A1 sowie aus der nicht vorveröffentlichten deutschen Patentanmeldung Nr. 10 2021 118 811.3 bekannt, auf die hier Bezug genommen wird.

In einem vorteilhaften Aspekt der Erfindung liegt das schaumbildende Additiv in einer wässrigen Lösung vor.

Das schaumbildende Additiv umfasst mindestens ein Schaummittel. In Bezug auf das Schaummittel ist die Erfindung nicht weiter eingeschränkt. Generell können alle im Stand der Technik üblichen Schaummittel für das schaumbildende Additiv verwendet werden.

Als Schaummittel können unter anderem Proteinschäume, Fluorproteinschäume, wasserfilmbildende Proteinschaummittel, Mehrbereichsschaummittel und alkoholbeständige Schaummittel verwendet werden.

Vorzugsweise ist das schaumbildende Additiv ausgewählt aus der Gruppe bestehend aus ionogenen Tensiden, Saponinen und Eiweißstoffen sowie Kombinationen davon.

Geeignete Beispiele für Schaummittel umfassen Alkylbenzolsulfonat, Fettalkoholpolyglycolethersulfate, Alkansulfonate, Alkylethercarboxylate, Betaine, Fettsäuresulfoalkylamide, Fettsäuresulfoalkylester, Natriumlaurylsulfoacetat, Natriumlauroylsarkosinat, Natriumlaurylethersulfat, Natriumdodecylsulfat, Kokosfettsäuremonoglyceridsulfat, Docusat-natrium, Natriumlaurylsulfoacetat, Natriumlauroylsarcosinat und Natriumdodecylsulfat sowie Kombinationen davon.

Die vorgeschlagenen Schaummittel weisen den technischen Vorteil auf, dass diese kostengünstig, beliebig verfügbar und sehr gut mit Wasser mischbar sind.

Das schaumbildende Additiv kann 0,1 - 6 Gew.-% des Schaummittels umfassen, bevorzugt 4 - 6 Gewichtsprozent, besonders bevorzugt 5 - 6 Gew.-%, bezogen auf das Gesamtgewicht des schaumbildenden Additivs.

Das schaumbildende Additiv umfasst ferner eine Base. In Bezug auf die Base ist die Erfindung nicht weiter eingeschränkt. Generell können alle im Stand der Technik üblichen Basen für das schaumbildende Additiv verwendet werden.

Beispielsweise kann die Base ein poröser Naturkalk sein.

Vorzugsweise ist die Base ausgewählt aus der Gruppe der Carbonate, Hydrogencarbonate, Oxide und Hydroxide sowie Kombinationen davon.

Als Carbonate werden insbesondere Metallcarbonate eingesetzt, vorzugsweise Alkali- und Erdalkalimetallcarbonate. Geeignete Beispiele für Carbonate sind Bariumcarbonat, Kalziumcarbonat, Magnesiumcarbonat, Kaliumcarbonat, Natriumcarbonat und Zinkcarbonat sowie Kombinationen davon.

Als Hydrogencarbonate werden insbesondere Metallhydrogencarbonate eingesetzt, vorzugsweise Alkali- und Erdalkalimetallhydrogencarbonate. Geeignete Beispiele für Hydrogencarbonate umfassen Kalziumhydrogencarbonat, Magnesiumhydrogencarbonat, Bariumhydrogencarbonat, Strontiumhydrogencarbonat Natriumhydrogencarbonat und Kaliumhydrogencarbonat sowie Kombinationen davon.

Als Oxide können insbesondere Metalloxide verwendet werden, vorzugsweise Alkali- und Erdalkalimetalloxide. Geeignete Beispiele für Oxide umfassen Lithiumoxid, Natriumoxid, Kaliumoxid, Magnesiumoxid, Kalziumoxid, Strontiumoxid und Bariumoxid sowie Kombinationen davon.

Als Hydroxide werden insbesondere Metallhydroxide eingesetzt, vorzugsweise Alkali- und Erdalkalimetallhydroxide. Beispiele für Hydroxide umfassen insbesondere Lithiumhydroxid, Natriumhydroxid, Kaliumhydroxid, Kalziumhydroxid, Bariumhydroxid, Strontiumhydroxid und Zinkhydroxid sowie Kombinationen davon.

Da das schaumbildende Additiv in einer wässrigen Lösung vorliegt, liegt auch die Base in einer wässrigen Lösung vor. Vorzugsweise ist die Base in der wässrigen Lösung gelöst.

In einer vorteilhaften Ausführungsform der Erfindung ist die wässrige Lösung eine von der Base gesättigte Lösung. Aufgrund des hohen Basengehalts weisen die gesättigten Lösungen eine besonders hohe Ionenkonzentration auf. Vorzugsweise entspricht die Ionenkonzentration dem Löslichkeitsprodukt der jeweiligen Base. Wässrige Lösungen mit einer solchen Basenkonzentration bleiben auch unterhalb des Gefrierpunkts von Wasser flüssig. Folglich dient die Base zusätzlich als Frostschutzmittel. Derartige gesättigte Lösungen eignen sich insbesondere für den Betrieb oder den Einsatz in einem Fahrzeug.

Besonders bevorzugt umfasst das Additiv eine gesättigte, wässrige Lösung von Natriumcarbonat, weiter bevorzugt eine wässrige, gesättigte Lösung von Kaliumcarbonat sowie Kombinationen davon.

Das Bereitstellen einer Base im schaumbildenden Additiv ermöglicht vorteilhafterweise eine direkte Neutralisierung des Elektrolyten auf Basis von Schwefeldioxid in Form einer Säure-Base-Neutralisation.

Das in den Elektrolyten enthaltene Schwefeldioxid löst sich besonders gut in Wasser und kann daher besonders gut aufgenommen werden. Die Löslichkeit von Schwefeldioxid in Wasser beträgt 112,7 g Schwefeldioxid je 1 l Wasser bei 20°C. Mit Wasser reagiert Schwefeldioxid zu schwefliger Säure, die wieder in einer Neutralisationsreaktion mit der Base reagieren kann. Die Base kann daher das in der wässrigen Lösung gelöste Schwefeldioxid in beständigere chemische Verbindungen überführen. Beispielsweise kann das Schwefeldioxid durch Carbonate in beständige Sulfite oder Sulfate und/oder Hydrogensulfite überführt werden. Darüber hinaus bietet die Base den technischen Vorteil, dass diese nicht toxisch, gut in Wasser löslich und beliebig verfügbar ist.

Ferner kann das schaumbildende Additiv weitere Zusatzstoffe umfassen.

Geeignete Beispiele für Zusatzstoffe umfassen Erdalkalimetallchloride, Flammschutzmittel, höhere Alkohole und Harnstoff sowie Kombinationen davon. Höhere Alkohole sind insbesondere gesättigte, ein bis dreiwertige Alkohole mit zwei bis 12 C-Atomen, wobei die höheren Alkohole primär, sekundär oder tertiär angeordnete Hydroxylgruppen aufweisen können. Besonders bevorzugt wird Kalziumchlorid (CaCl₂) als Erdalkalimetallchlorid verwendet.

Die Zugabe von Kalziumchlorid erzielt den technischen Vorteil, dass die Schwefeldioxidabsorption durch Reaktion zum unlöslichen Kalziumsulfit erhöht wird.

In einer weiteren Gestaltung der Erfindung weist die Dosiervorrichtung einen das schaumbildende Additiv enthaltenden Vorratsbehälter und eine mit dem Vorratsbehälter verbundene Förderpumpe auf. Die Förderpumpe ist an einen im Innenraum des Speichergehäuses angeordneten Schaumverteiler angeschlossen.

Vorzugsweise ist der das schaumbildende Additiv enthaltende Vorratsbehälter außerhalb des Speichergehäuses angeordnet. Der Vorratsbehälter kann aber auch innerhalb des Speichergehäuses angeordnet sein. Der Vorratsbehälter dient zur Aufbewahrung des schaumbildenden Additivs vor der Bildung des Schaums und der Freisetzung des Schaums innerhalb des Speichergehäuses.

Das Bereitstellen eines Vorratsbehälters bietet den Vorteil, dass das Additiv räumlich getrennt von den Batteriezellen aufbewahrt werden kann. Somit kann erst im Bedarfsfall das schaumbildende Additiv aus dem Vorratsbehälter entnommen werden.

Vorzugsweise ist die mit dem Vorratsbehälter verbundene Förderpumpe eine Hochdruckpumpe. Die Verwendung einer Hochdruckpumpe ermöglicht eine besonders schnelle Entnahme des schaumbildenden Additivs aus dem Vorratsbehälter.

Darüber hinaus ist die Förderpumpe an einem Schaumverteiler angeschlossen. In Bezug auf den Schaumverteiler ist die Erfindung nicht weiter eingeschränkt. Im Allgemeinen können alle im Stand der Technik bekannten Schaumverteiler verwendet werden, die dazu geeignet sind, ein schaumbildendes Additiv, insbesondere ein schaumbildendes Additiv bestehend aus einem Schaummittel, mindestens einer Base und wahlweise weiteren Zusatzstoffen, im Innenraum des Speichergehäuses freizusetzen.

Beispielsweise kann der Schaumverteiler eine Leitung, vorzugsweise eine flexible Leitung, mit Düsenausgängen zur Verteilung des schaumbildenden Additivs umfassen. Vorzugsweise ermöglichen die Düsen eine Verneblung des schaumbildenden Additivs, wodurch vorteilhafterweise die Kontaktfläche zwischen dem Additiv und dem austretenden Elektrolyten vergrößert wird.

In einem anderen Aspekt der Erfindung umfasst die Sicherheitsvorrichtung ferner eine Überwachungseinrichtung, wobei die Überwachungseinrichtung ein Batterie-Kontrollsystem und eine mit dem Batterie-Kontrollsystem verbundene Sensoreinheit umfasst.

Das Batterie-Kontrollsystem ist vorzugsweise außerhalb des Batteriespeichers angeordnet. Es ist daher denkbar, dass das Batterie-Kontrollsystem mehrere Batteriespeicher überwacht. Mit dem Batterie-Kontrollsystem ist eine Sensoreinheit verbunden, die vorzugsweise innerhalb eines Speichergehäuses angeordnet ist.

In einer Ausführungsform ist die Sensoreinheit ausgewählt aus der Gruppe bestehend aus optischen Sensoren, Druck-, Temperatur- und Chemiesensoren.

In einer Ausführungsform ist die Sensoreinheit ein spektroskopischer Gassensor zum Detektieren von gasförmigem Schwefeldioxid.

In einer bevorzugten Ausführungsform ist der spektroskopische Gassensor ein nicht-dispersiver Infrarotsensor.

Tritt während des Batteriebetriebs ein anormales Verhalten mindestens einer Batteriezelle auf, kann dies durch die oben genannten Sensortypen erkannt werden. Ein Anstieg des Drucks, der Temperatur oder eine Änderung der Atmosphärenzusammensetzung innerhalb des Speichergehäuses kann somit durch die Sensoreinheit erfasst werden. Ein Defekt an einer Batteriezelle kann so direkt und ohne Umwege erkannt werden.

Insbesondere ein selektiv auf Schwefeldioxid ansprechender Gassensor ermöglicht eine direkte Auskunft über das Vorhandensein von Schwefeldioxid innerhalb des Speichergehäuses. Erfasst der Gassensor Schwefeldioxid in der Atmosphäre des Speichergehäuses, ist der Elektrolyt auf Basis von Schwefeldioxid aus der Batteriezelle ausgetreten und die entsprechende Zelle somit defekt.

Die von der Sensoreinheit erfassten Daten werden an das mit der Sensoreinheit verbundene Batterie-Kontrollsystem weitergeleitet. Typischerweise sind die an das Batterie-Kontrollsystem gesendeten Daten Messdaten, die in einem bestimmten Zeitintervall gesammelt wurden.

In einem weiteren Aspekt der Erfindung ist das Batterie-Kontrollsystem dazu vorgesehen, Daten von der Sensoreinheit zu erhalten und diese hinsichtlich eines Auslöse- oder Nichtauslöse-Szenarios auszuwerten.

Das Batterie-Kontrollsystem erhält die Daten der Sensoreinheit und wertet diese hinsichtlich des Vorhandenseins eines Defekts einer Batteriezelle innerhalb des Speichergehäuses aus. Das Batterie-Kontrollsystem entscheidet auf Grundlage der Daten darüber, ein Auslöse- oder ein Nichtauslöse-Szenario auszulösen. Registriert das Batterie-Kontrollsystem anormale Daten, genauer gesagt Daten, die von den zu erwartenden Daten abweichen, so leitet das Batterie-Kontrollsystem ein Auslöseszenario ein. Stimmen die von der Sensoreinheit empfangenen Daten mit den zu erwartenden Daten überein, wird ein Nichtauslöse-Szenario gewählt.

Beim Vorliegen eines Auslöse-Szenarios wird die Dosiervorrichtung durch das Batterie-Kontrollsystem angesteuert, sodass das schaumbildende Additiv durch den Schaumverteiler freigesetzt wird, wodurch innerhalb des Speichergehäuses ein Schaum erzeugt wird. Im Falle eines Nichtauslöse-Szenarios bleibt der Statusquo erhalten und die Dosiervorrichtung wird nicht angesteuert.

Vorzugsweise findet der oben beschriebene Prozess in regelmäßigen Zeitintervallen statt. Somit kann die Überwachungseinrichtung die Batteriezellen in Echtzeit überwachen, wodurch anormale Daten wie Druck-, Temperatur und Atmosphärenparameter innerhalb des Speichergehäuses unverzüglich und zuverlässig erfasst werden können. Daher kann auch das Batterie-Kontrollsystem unverzüglich Maßnahmen ergreifen, um innerhalb des Batteriespeichers das Additiv zum Neutralisieren eines austretenden Elektrolyten freizusetzen. Folglich ist eine Sicherheitsvorrichtung gemäß der Erfindung, die eine Dosiervorrichtung und eine Überwachungseinrichtung aufweist, ein aktives Sicherheitssystem.

In einer weiteren Ausführungsform umfasst die Dosiervorrichtung einen Zumischer und eine Umlaufpumpe, wobei der Zumischer jeweils einen separaten Anschluss zum Schaumverteiler, der Förderpumpe und der Umlaufpumpe aufweist, und wobei die Umlaufpumpe mit dem Innenraum des Speichergehäuses strömungsmäßig verbunden ist.

Typischerweise kann bei der Freisetzung des Schaums innerhalb des Speichergehäuses nicht sofort eine ausreichende Menge des Elektrolyten fixiert und neutralisiert werden. Der austretende Elektrolyt, der sich über die Zeit in der Atmosphäre des Speichergehäuses anreichert, kommt üblicherweise nur durch Gasdiffusion in Kontakt mit dem freigesetzten Schaum. Die oben beschriebene Ausführungsform bietet hierbei den Vorteil, dass eine Umlaufpumpe strömungsmäßig mit dem Innenraum und damit mit der Atmosphäre des Speichergehäuses verbunden ist. Hierdurch kann die Atmosphäre des Speichergehäuses abgepumpt und über den Zumischer und Schaumverteiler dem Speichergehäuse wieder zugeführt werden. Mit anderen Worten erfolgt eine Umwälzung der Atmosphäre innerhalb des Speichergehäuses. Somit kann der Elektrolyt auf Basis von Schwefeldioxid wiederholt in Kontakt mit dem Schaum gebracht werden. Auf diese Weise lässt sich eine nahezu vollständige Neutralisation des Elektrolyten gewährleisten.

In weiteren Ausführungsform ist das Batterie-Kontrollsystem dazu eingerichtet, beim Vorliegen eines Auslöse-Szenarios die Dosiervorrichtung zur Aktivierung der Umlaufpumpe anzusteuern, sodass diese eine im Speichergehäuse vorliegende Gasatmosphäre absaugt und dem Speichergehäuse über den Zumischer wieder zuführt.

Vorzugsweise wird die dem Speichergehäuse entnommene Gasatmosphäre über den Zumischer und den Schaumverteiler wieder dem Speicher zugeführt.

Die Verknüpfung der Umlaufpumpe mit der Überwachungseinrichtung ergibt den technischen Vorteil, dass neben der Erzeugung des Schaums zusätzlich noch eine Umwälzung der Gasatmosphäre im Speichergehäuse gesteuert werden kann.

Ferner betrifft die Erfindung ein Verfahren zum Auslösen einer Sicherheitsvorrichtung für einen Batteriespeicher, der vorangehenden Art, wobei das Verfahren die folgenden Schritte umfasst:
a) Erkennen eines Austretens des Elektrolyten aus einer Batteriezelle im Innenraum des Speichergehäuses durch die Sensoreinheit der Überwachungseinrichtung, wobei davon Daten erstellt und an das Batteriekontrollsystem weitergeleitet werden,
b) Bewerten der Daten durch das Batteriekontrollsystem hinsichtlich des Vorliegens eines Auslöse- oder Nichtauslöseszenarios,
c) Erkennen eines Auslöseszenarios,
d) Ansteuern der Dosiervorrichtung,
e) Erzeugen eines Schaums aus dem schaumbildenden Additivs,
f) Freisetzen des Schaums im Innenraum des Speichergehäuses,
g) Wahlweise Einhalten einer Wartezeit, und
h) Wahlweise Aktivieren einer Umlaufpumpe, die eine im Innenraum des Speichergehäuses vorliegende Gasatmosphäre absaugt und über den Zumischer und den Schaumverteiler dem Innenraum wieder zuführt.

Eine Sicherheitsvorrichtung mit den oben genannten Verfahren kann somit unverzüglich auf einen aus einer Batteriezelle austretenden Elektrolyten reagieren und Gegenmaßnahmen ergreifen. Der freigesetzte Schaum ermöglicht es, den Elektrolyten aus Basis von Schwefeldioxid zu fixieren und die im Schaum vorhandene Base kann mit dem Elektrolyten in einer Neutralisation, insbesondere mit Schwefeldioxid, reagieren. Somit kann der Elektrolyt zuverlässig an einem Übertritt zur Umgebung gehindert werden.

Die Erfindung wird nachfolgend anhand von Ausführungsbeispielen mit Bezug auf die beigefügten Zeichnungen näher beschrieben. In den Zeichnungen zeigen:
- Figur 1 in einer schematischen Darstellung einen Batteriespeicher mit Batteriezellen einer Dosiervorrichtung und einer Überwachungseinrichtung;
- Figur 2 in einer schematischen Darstellung den Batteriespeicher aus Figur 1 im aktiven Betrieb im Falle eines austretenden Elektrolyten aus einer defekten Batteriezelle;
- Figur 3 in einer schematischen Darstellung einen Gassensor zur selektiven Detektion von gasförmigen Schwefeldioxid;
- Figur 4 ein Beispiel für einen geeigneten Messbereich für den Gassensor aus Figur 3; und
- Figur 5 ein schematisches Ablaufdiagramm der Schritte eines Verfahrens zum Auslösen einer Sicherheitsvorrichtung für einen Batteriespeicher aus Figur 1.

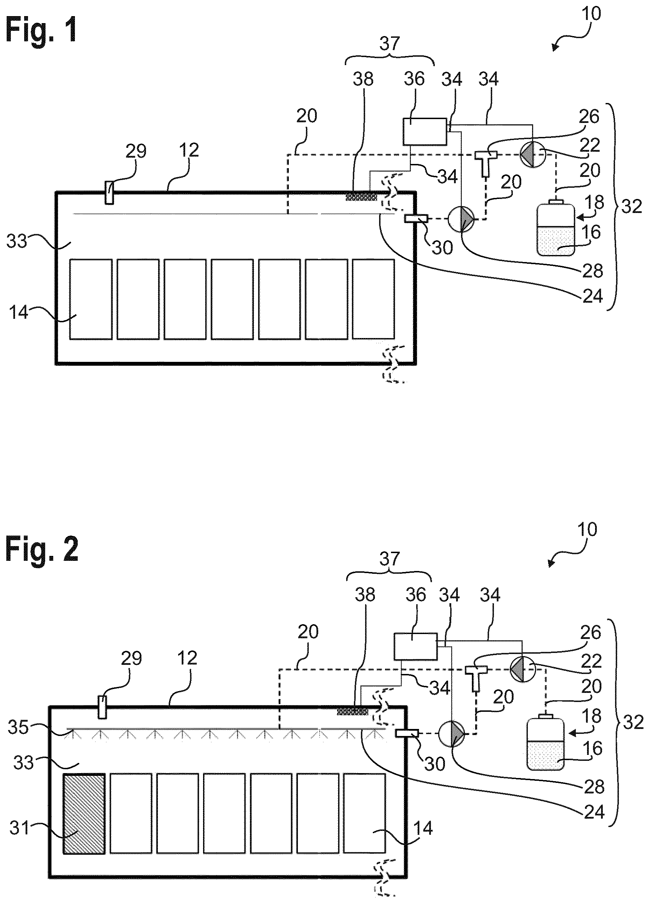

Figur 1 zeigt einen Batteriespeicher 10 mit einer Sicherheitsvorrichtung 32, 37. Die Sicherheitsvorrichtung 32, 37 umfasst eine Dosiervorrichtung 32 und eine Überwachungseinrichtung 37.

Der Batteriespeicher 10 weist zudem ein Speichergehäuse 12 und mehrere im Innenraum 33 des Speichergehäuses 12 angeordnete Batteriezellen 14 auf. Das Speichergehäuse 12 ist insbesondere gasdicht ausgeführt.

Im Innenraum 33 ist wenigstens eine Batteriezelle 14 angeordnet. Es können aber beliebig viele Batteriezellen 14 innerhalb des Speichergehäuses 12 angeordnet sein. Die Batteriezellen 14 können miteinander verschaltet sein (hier nicht gezeigt), um eine Batterie mit einer höheren Energie zur Verfügung zu stellen.

Die Batteriezellen 14 enthalten mindestens einen Elektrolyten auf Basis von Schwefeldioxid (hier nicht gezeigt). Generell ist die Erfindung in Bezug auf die Batteriezelle 14 nicht weiter eingeschränkt, solange die Batteriezelle 14 als Elektrolyten Schwefeldioxid umfasst.

Beispielsweise können Batteriezellen 14 mit einer Elektrolytzusammensetzung aus der WO 2021 019 042 A1, WO 2015 045 73 A2 oder der nicht vorveröffentlichten deutschen Patentanmeldung Nr. 10 2021 118 811.3 verwendet werden.

Die Dosiervorrichtung 32 umfasst einen Vorratsbehälter 18, der außerhalb des Speichergehäuses 12 angeordnet ist.

Der Vorratsbehälter 18 enthält ein schaumbildendes Additiv 16.

Das schaumbildende Additiv 16 liegt in einer wässrigen Lösung vor und umfasst die folgenden Komponenten:
(A) Mindestens ein Schaummittel ausgewählt aus der Gruppe bestehend aus ionogenen Tensiden, Saponinen und Eiweißstoffen sowie Kombinationen davon,
(B) Mindestens eine Base ausgewählt aus der Gruppe bestehend aus Karbonaten, Hydrogenkarbonaten, Oxiden und Hydroxiden sowie Kombinationen davon, und
(C) Wahlweise weitere Zusatzstoffe ausgewählt aus der Gruppe bestehend aus Erdalkalimetallchloriden, Flammschutzmittel, höhere Alkohole und Harnstoff sowie Kombinationen davon.

In dem Vorratsbehälter 18 befindet sich eine Menge des schaumbildenden Additivs 16, die ausreichend ist, um das in den Batteriezellen 14 enthaltene Schwefeldioxid zu neutralisieren. Vorzugsweise enthält der Vorratsbehälter 18 eine Menge des schaumbildenden Additivs 16, die ausreichend ist um das in mindestens einer Batteriezelle 14 enthaltene Schwefeldioxid vollständig zu neutralisieren. Besonders bevorzugt enthält der Vorratsbehälter 18 einen Überschuss des schaumbildenden Additivs 16 in Bezug auf den in mindestens einer der Batteriezellen 14 enthaltenen Elektrolyten auf Basis von Schwefeldioxid. Letzteres ist insbesondere von Vorteil, da bei der Entnahme des schaumbildenden Additivs 16 aus dem Vorratsbehälter 18 üblicherweise ein Rückstand im Vorratsbehälter 18 verbleibt.

Der Vorratsbehälter 18 ist durch eine Leitung 20 strömungsmäßig mit einer Förderpumpe 22 verbunden, die außerhalb des Speichergehäuses 12 angeordnet ist. Die Förderpumpe 22 ist wiederum an einem ebenfalls außerhalb des Speichergehäuses angeordneten Zumischer 26 angeschlossen.

Der Zumischer 26 ist mit einem Schaumverteiler 24, einer Umlaufpumpe 28 und der Förderpumpe 22 über Leitungen 20 strömungsmäßig verbunden.

Der Schaumverteiler 24 ist in einem Innenraum 33 des Speichergehäuses 12 angeordnet. Der Schaumverteiler 24 kann als eine starre oder eine flexible Leitung ausgeführt sein. Zudem kann der Schaumverteiler 24 beliebig innerhalb des Speichergehäuses 12 angeordnet sein. Beispielsweise kann der Schaumverteiler 24 an einer Innenwand des Speichergehäuses angebracht oder an einer Außenwand einer Batteriezelle 14 fixiert sein.

Zudem weist der Schaumverteiler 24 Auslässe (hier nicht gezeigt) zur Freisetzung des schaumbildenden Additivs 16 auf. Die Auslässe können beispielsweise als Düsen ausgeführt sein, die das schaumbildende Additiv 16 im Innenraum 33 des Speichergehäuses 12 verteilen. Die Freisetzung des schaumbildenden Additivs 16 erzeugt den erfindungsgemäßen Schaum 35 zum Neutralisieren des Elektrolyten. Der Schaum 35 entsteht insbesondere durch eine Vermischung des schaumbildenden Additivs 16 mit der Atmosphäre innerhalb des Speichergehäuses 12. Insbesondere die durch einen austretenden Elektrolyten freigesetzten Gase tragen zu einer Erzeugung des Schaums aus dem schaumbildenden Additiv 16 bei.

Ferner ist in eine Wandung des Speichergehäuses 12 eine Ausströmöffnung 30 eingelassen. Die Ausströmöffnung 30 verbindet strömungsmäßig den Innenraum 33 des Speichergehäuses 12 mit der Umlaufpumpe 28. Die Ausströmöffnung 30 kann als beispielsweise als Ventil ausgestaltet sein.

Darüber hinaus weist die Sicherheitsvorrichtung eine Überwachungseinrichtung 37 auf.

Die Überwachungseinrichtung 37 umfasst ein Batterie-Kontrollsystem 36 und eine mit dem Batterie-Kontrollsystem 36 verbundene Sensoreinheit 38, die innerhalb des Speichergehäuses 12 angeordnet ist.

Die Sensoreinheit 38 kann beliebig innerhalb des Speichergehäuses 12 angeordnet sein. Es ist daher denkbar, dass die Sensoreinheit 38 an einer Innenwand des Speichergehäuses 12 fixiert ist. Die Sensoreinheit 38 kann aber auch direkt an einer Batteriezelle 14 befestigt sein.

In einer Variante der Erfindung können auch mehrere Sensoreinheiten 38 an beliebigen Stellen innerhalb des Speichergehäuses 12 angeordnet sein. Somit können verschiedene Bereiche des Batteriespeichers 10 sensorisch durch die Sensoreinheit 38 überwacht werden.

In Bezug auf die Sensoreinheit 38 ist die Erfindung nicht weiter eingeschränkt. Es können alle im Stand der Technik üblichen Sensoreinheiten verwendet werden, die dazu geeignet sind, einen Druck-, Temperatur- oder einen Atmosphärenunterschied zu detektieren.

Bevorzugt ist die Sensoreinheit ein Sensor zur selektiven Detektion von Schwefeldioxid, vorzugsweise von gasförmigen Schwefeldioxid in einer Atmosphäre. Hierzu können alle im Stand der Technik bekannten Sensoren verwendet werden.

Beispielsweise kann ein aus der US 4 222 745 A bekannter Indikator zur Detektion von ausströmendem Schwefeldioxid aus einer Batterie verwendet werden. Dieser besteht aus an feinverteilten Siliciumdioxid adsorbiertem Kaliumdichromat sowie einem adhäsiven polymeren Material, beispielsweise Polydimethylsiloxan als stabilisierende Matrix. Zur intensiven Farbwahrnehmung kann weiterhin Titandioxid zugesetzt werden. Bei Kontakt mit Schwefeldioxid wechselt dieser Indikator seine Farbe.

Auch denkbar ist ein Detektor, bekannt aus der WO 02 079 746 A1, bestehend aus pulverförmigem Kaliumdichromat, welches auf einem Klebestreifen zusammen mit einem Oxidationsbeschleuniger und einem Metalloxidinhibitor aufgebracht wird, der den Nachweis von unter anderen Schwefeldioxid ermöglicht.

Auch bekannt ist ein Sensor aus der US 6 579 722 B1 zum Nachweis von gasförmigem Schwefeldioxid, bei dem ein chemielumineszierendes Reagenz in einem Polymerfilm immobilisiert wird. Die Chemielumineszenz durch den Kontakt zu Schwefeldioxid wird mithilfe eines Phototomultipliers oder eines photoelektrischen Elements detektiert.

Ebenfalls kann ein Sensor aus der JP 2003035705 A verwendet werden, der zum Schwefeldioxidnachweis einer gasförmigen Probe geeignet ist, bei dem die optische Transmission im UV/VIS/IR-Bereich unter Einwirkung des Analyten verfolgt wird. Der Sensor besteht aus einer Kombination aus Orange-1 und Aminen sowie einer Kombination von Eisenammoniumsulfat, Phenanthrolin und Säuren.

Ebenfalls ist ein Sensor aus der EP 0 585 212 A2 bekannt, der als eine Sensormembran zum Nachweis von Schwefeldioxid ausgeführt ist. Hierzu werden Übergangsmetallkomplexe mit Ruthenium, Osmium, Iridium, Rhodium, Palladium, Platin oder Rhenium als Zentralatom, 2,2'-Bipyridin, 1,10-Phenanthrolin oder 4,7-diphenyl-1,10, Phenanthrolin als Liganden und Perchlorat oder Chlorid oder Sulfat als Gegenanion verwendet. Die Polymermatrix stammt aus der Gruppe der Zellulosederivate, der Polystyrole, der Polytetrahydrofurane oder deren Derivate.

Auch kann ein Sensor aus der EP 0 578 630 A1 genutzt werden, der eine Sensormembran von optischen Sensoren zum Nachweis von Schwefeldioxid bereitstellt. Hierzu werden pH-Indikatoren, wie der Fluoreszenzfarbstoff Chinin oder der Absorptionsfarbstoff Bromkresolpurpur mit Gegenionen, wie langkettige Sulfonat-Ionen oder Ammonium-Ionen mit langkettigen Resten, in einer Polymermatrix aus Polyvinylchlorid immobilisiert.

Besonders bevorzugt wird ein optischer Sensor zur selektiven Detektion von gasförmigem Schwefeldioxid genutzt.

Beispielsweise kann ein optischer Sensor genutzt werden, wie er aus der *"*Optical sensors for dissolved sulfur dioxide" (A. Stangelmayer, I. Klimant, O. S. Wolfbeis, Fresenius J. Analytical Chemistry, 1998, 362, 73-76) bekannt ist. Zur Detektion von gasförmigem Schwefeldioxid werden lipophile pH-Indikatoren in Form von Ionenpaaren, die in einer gaspermeablen Silikon- oder OsmoSil-Membran immobilisiert sind, als Schwefeldioxid-Sensoren für gasförmige Proben eingesetzt. Als pH-Indikatoren werden hierbei Ditetraalkylammoniumsalze mit langkettigen Alkylresten von Bromthymolblau, Bromkresolpurpur und Bromphenolblau verwendet. Als Messgröße dient die Absorption von Licht im UV/VIS-Bereich.

Auch kann ein optischer Sensor zur quantitativen Bestimmung von Schwefeldioxid in einer Probe genutzt werden, wie er aus der DE 10 2004 051 924 A1 bekannt ist. Der hier vorgeschlagene Sensor enthält eine homogen in einer Matrix des transparenten Sensors immobilisierte Indikatorsubstanz, welche mit der Probe in zumindest indirekten Kontakt kommt und bei Anwesenheit von Schwefeldioxid ihre Konzentration ändert. Diese Konzentrationsänderung der Indikatorsubstanz kann photometrisch als Änderung der Lichttransmission im UV/VIS-Bereich des Sensors verfolgt werden.

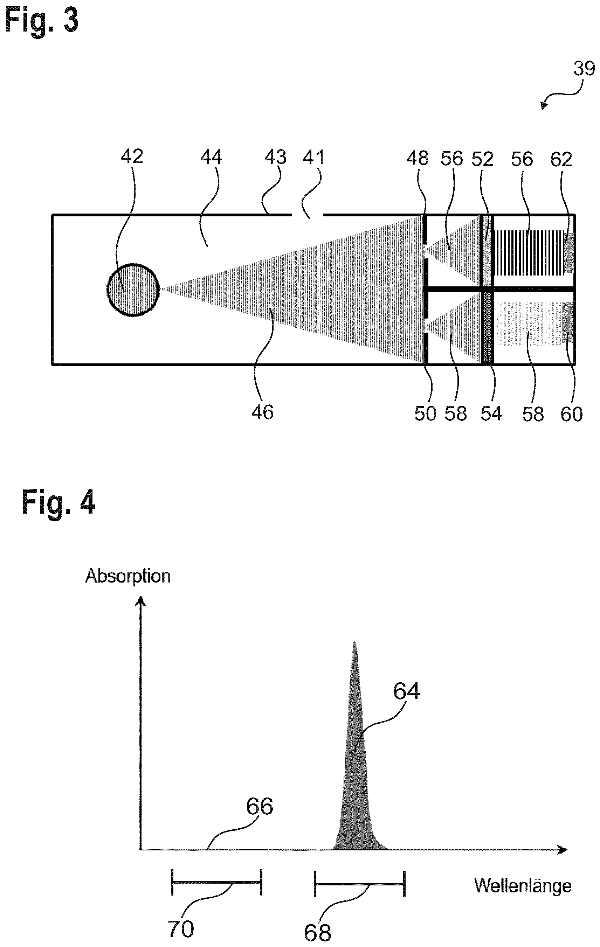

In einer besonders bevorzugten Variante ist der Sensor zur selektiven Detektion von Schwefeldioxid ein Sensor, wie er in der Figur 3 beschrieben ist.

Die Sensoreinheit 38 ist dazu eingerichtet, ein Austreten des Elektrolyten aus einer Batteriezelle 14 zu erfassen, davon Daten zu erstellen und an das Batterie-Kontrollsystem 36 weiterzuleiten. Die Übermittlung der Daten geschieht über eine elektrische Verbindungen 34.

Das Batterie-Kontrollsystem 36 ist außerhalb des Speichergehäuses 12 angeordnet und mit der Sensoreinheit 38 über Verbindungen 34 elektrisch verbunden. Vorzugsweise sind die Verbindungen 34 dazu ausgelegt, elektrische Signale und somit Daten zu übertragen.

Das Batterie-Kontrollsystem 36 ist in der Lage, die Daten von der Sensoreinheit 38 zu empfangen und diese hinsichtlich eines Auslöse- oder Nichtauslöse-Szenarios auszuwerten. Registriert das Batterie-Kontrollsystem anormale Daten bezüglich einer Temperatur-, einer Druck- oder einer Atmosphärenveränderung innerhalb des Speichergehäuses 12, so löst das Batterie-Kontrollsystem 36 ein Auslöseszenario aus.

Das Batterie-Kontrollsystem 36 ist über eine Verbindung 34 mit der Förderpumpe 22 elektrisch verbunden. Im Falle eines Auslöse-Szenarios kann das Batterie-Kontrollsystem 36 die Förderpumpe 22 gezielt ansteuern, sodass die Förderpumpe 22 aktiviert wird, und aus dem Vorratsbehälter 18 das schaumbildende Additiv 16 herausleitet. Das schaumbildende Additiv 16 gelangt somit aus dem Vorratsbehälter 18 über die Leitungen 20 und die Förderpumpe 22 in den Schaumverteiler 24, welcher das schaumbildende Additiv 16 schließlich im Innenraum 33 des Speichergehäuses 12 freisetzt und so einen Schaum 35 erzeugt.

Nach dem Einhalten einer Wartezeit kann das Batterie-Kontrollsystem 36 durch eine elektrische Verbindung 34 die Umlaufpumpe 28 aktivieren, sodass die Atmosphäre des Innenraums 33 abgesaugt wird und über Leitungen 20, den Zumischer 26 und den Schaumverteiler 24 wieder dem Innenraum 33 zugeführt wird. Hierdurch erfolgt eine Umwälzung der im Innenraum 33 vorliegenden Atmosphäre und nicht-neutralisierte Elektrolytbestandteile werden wieder mit dem Schaum 35 in Kontakt gebracht.

Figur 2 zeigt den Batteriespeicher 10 aus Figur 1 im Falle eines Auslöseszenarios.

Darüber hinaus enthält die Figur 2 die gleichen Komponenten wie in Figur 1 bereits beschrieben.

Nachfolgend wird der Mechanismus eines Auslöseszenarios anhand von Figur 2 beschrieben. Kommt es zu einem elektrischen, thermischen, chemischen Defekt einer Batteriezelle 14, so kann es unter Umständen zu einer Zellöffnung der betreffenden Zelle 14 kommen. Eine solche Batteriezelle 14 ist somit eine defekte Zelle 31. Es kann aber auch zu einer Beschädigung einer Zelle 14 kommen, ohne dass parallel eine Zellöffnung stattfindet. In beiden Fällen wird sich jedoch zwangsläufig ein Parameter im Innenraum des Speichergehäuses 12 ändern, wie beispielsweise Temperatur, Duck, elektrische Eigenschaften der Zellen oder die Atmosphärenzusammensetzung. Eine Änderung dieser Parameter wird von einer Sensoreinheit 38 erfasst.

Im Falle einer Zellöffnung einer defekten Zelle 31, kann es zu einem Austreten eines Elektrolyten auf Basis von Schwefeldioxid kommen. Der Elektrolyt kann entweder in flüssiger oder in gasförmiger Form in den Innenraum 33 des Speichergehäuses 12 eintreten. Die Sensoreinheit 38 erfasst das Vorhandensein eines solchen Elektrolyten in flüssiger oder gasförmiger Form innerhalb des Speichergehäuses in Form abweichender Parameter, wie oben beschrieben. Diese abweichenden Parameter werden als anormale Parameter in Form von Daten an das Batteriekontrollsystem 36 gesendet. Das Batteriekontrollsystem 36 vergleicht die erhaltenen Daten fortlaufend mit den zu erwartenden Daten. Wird eine vordefinierte Abweichung der erhaltenen Daten zu den zu erwartenden Daten festgestellt, so löst das Batteriekontrollsystem 36 ein Auslöseszenario aus. Daraufhin wird das schaumbildende Additiv 16 aus dem Vorratsbehälter 18 durch eine Förderpumpe 22 entnommen und dem Schaumverteiler 24 zugeführt. Der Schaumverteiler 24 setzt das schaumbildende Additiv in den Innenraum 33 des Speichergehäuses 12 frei. Durch diese Freisetzung kommt es zu einer Vermischung von dem im Innenraum 33 befindlichen Elektrolyten, dem freigesetzten schaumbildenden Additiv 16 sowie der im Speichergehäuse 12 vorhandenen Atmosphäre. Hieraus entsteht ein Schaum 35, der sich im Innenraum 33 niederschlägt. Der Schaum 35 kann den Elektrolyten sowohl fixieren, als auch in einer Säure-Base Reaktion neutralisieren.

Figur 3 zeigt einen Schwefeldioxid-Sensor auf Basis eines Zweistrahlspektrometers.

Der Gassensor 39 weist eine von einem Detektorgehäuse 43 umschlossene Detektorkammer 44 auf. Darüber hinaus verfügt das Detektorgehäuse 43 über eine Gaseintrittsöffnung 41.

Die Gaseintrittsöffnung 41 verbindet die Detektorkammer 44 mit dem Innenraum 33 des Speichergehäuses strömungsmäßig. Dadurch kann ein freier Gasaustausch zwischen den beiden Bereichen stattfinden und ein austretender Elektrolyt im Speichergehäuse 12 kann durch den Gassensor 39 erfasst werden.

Das Detektorgehäuse 43 weist eine langestreckte Form auf, wobei einem Ende innerhalb des Gehäuses eine Lichtquelle 42 zugeordnet ist.

Die Lichtquelle 42 ist vorzugsweise eine Infrarotlichtquelle, besonders bevorzugt eine Nahinfrarotlichtquelle. In Bezug auf die Infrarotlichtquelle ist die Erfindung nicht eingeschränkt. Es können alle im Stand der Technik bekannten IR-Lichtquellen verwendet werden, solange diese Wellenlängen aussenden können, die dazu geeignet sind, Schwefeldioxid in einer Gasatmosphäre zu detektieren.

Vorzugsweise sendet die Lichtquelle 42 Wellenlängen im Bereich zwischen 400 - 1800 cm⁻¹ aus, besonders bevorzugt zwischen 450 - 600 cm⁻¹, 1100 - 1200 cm⁻¹ und/oder 1300 - 1400 cm⁻¹. Im Betrieb sendet die Lichtquelle 42 einen NIR-Strahl 46 mit einem kontinuierlichen Spektrum der Wellenlängen im oben genannten Bereich aus.

Der von der Lichtquelle 42 ausgesendete NIR-Strahl 46 wird durch eine in der Detektorkammer 44 angeordnete Messstrahlblende 48 und eine Referenzstrahlblende 50 in zwei räumlich voneinander getrennte NIR-Strahlen aufgeteilt. Genauer gesagt wird der NIR-Strahl 46 durch die Messstrahlblende 48 in einen Messstrahl 56 und durch die Referenzstrahlblende 50 in einen Referenzstrahl 58 aufgespalten. Somit werden durch die Blenden zwei separate Strahlengänge erzeugt.

Der Messstrahl 56 trifft nach dem Passieren der Messstrahlblende 48 auf einen Messstrahlfilter 52. Der Referenzstrahl 58 trifft nach dem Passieren der Referenzstrahlblende 50 auf einen Referenzstrahlfilter 54.

Geeignete Messstrahlfilter 52 und der Referenzstrahlfilter 54 sind beispielsweise Bandpassfilter, vorzugsweise Schmalbandfilter. Beispielsweise können die Bandpassfilter eine Bandbreite von 10 - 0,2 nm aufweisen, bevorzugt 5 - 0,2 nm, besonders bevorzugt 2 - 0,2 nm. Diese sind somit in der Lage, eine vorbestimmte Wellenlänge selektiv aus dem Referenzstrahl 58 und dem Messstrahl 56 herauszufiltern.

Als Referenz wird der Transmissionsbereich des Referenzstrahlfilters 54 so gewählt, dass er in einem schmalen Bereich des Spektrums durchlässig ist, in dem weder Schwefeldioxid noch andere Moleküle, wie beispielsweise Kohlenstoffdioxid Absorptionsbanden aufweisen.

Für den Messstrahlfilter 52, also den des Messstrahls 56, wird der Transmissionsbereich so gewählt, dass er in einen Bereich fällt, wo nur Schwefeldioxid absorbiert, jedoch keine anderen Gase, die das Messsignal verfälschen könnten.

Beispiele für geeignete Wellenlängen des Messstrahlfilters sind: 1,56 µm, 1,57 µm, 1,58 µm, 2,46 µm und 4,02 µm.

Nach dem Passieren des Messstrahlfilters 52 trifft der Messstrahl 56 auf einem dem Messstrahlfilter 52 nachgeordneten Messstrahldetektor 62. Analog trifft der Referenzstrahl 58 auf einen dem Referenzstrahlfilter 54 nachgeordneten Referenzstrahldetektor 60.

Zur Detektion der von den Filtern durchgelassenen Wellenlängen eignen sich z. B. Detektoren auf Basis von Thermoelementen. Diese sind in der Lage, eine thermische Energie direkt in eine elektrische Energie umzuwandeln, wodurch sehr geringe Thermospannungen generiert und somit erfasst werden können. Die so eingesetzten Detektoren arbeiten somit besonders präzise und eignen sich für die Detektion auch von geringen Mengen von Schwefeldioxid in einer Atmosphäre.

Figur 4 zeigt einen Messbereich eines Schwefeldioxidsensors aus Figur 3, wobei eine Absorption gegenüber einer Wellenlänge aufgetragen ist. Dargestellt wird die summierte Absorption des Messstrahl- und des Referenzstrahldetektors 60, 62.

Der Messstrahldetektor 62 erfasst das Messsignal 64 in einem Messwellenlängenbereich 68, während der Referenzstrahldetektor 60 das Referenzsignal 66 in einem Referenzwellenlängenbereich 70 erfasst. Der Referenzwellenlängenbereich 70 und Messwellenlängenbereich 68 sind durch die Wahl der Strahlfilter vorbestimmt. Ebenso ist die Breite der gemessenen Wellenlängenbereiche von der Wahl des Strahlfilters abhängig und beträgt in der Regel 10 - 0,2 nm, bevorzugt 5 - 0,2 nm, besonders bevorzugt 2 - 0,2 nm.

Erfasst der Messstrahldetektor 62 ein Messsignal 64, liegt Schwefeldioxid in der Atmosphäre der Detektorkammer 44 vor und somit auch im Innenraum des Speichergehäuses 12. Für einen positiven Schwefeldioxidnachweis kann ein Schwellenwert definiert werden, der typischerweise über dem Hintergrundrauschen des Detektors liegt.

Der Vorteil der dargestellten Zweistrahlspektrometer besteht darin, dass diese kompakt sind und sich so platzsparend innerhalb des Speichergehäuses 12 unterbringen lassen. Zudem erfolgt die Erfassung von Schwefeldioxid auf spektroskopische Weise, wodurch die Auswertung und Umwandlung in elektronische Informationen gegenüber herkömmlichen Verfahren erleichtert wird.

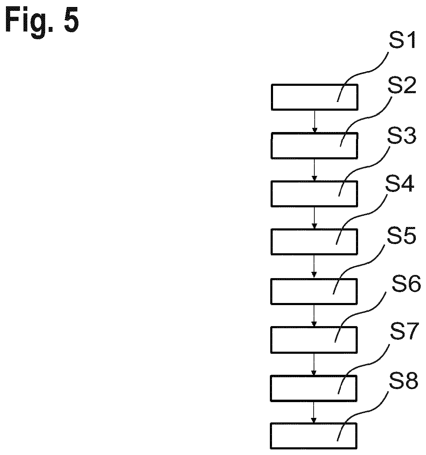

Figur 5 zeigt ein schematisches Ablaufdiagramm der Schritte eines Verfahrens zum Auslösen einer Sicherheitsvorrichtung für einen oben beschriebenen Batteriespeicher 10.

Im ersten Schritt, wird das Erkennen eines Austretens eines Elektrolyten aus einer Batteriezelle durchgeführt (Schritt 1). Das Erkennen geschieht mittels einer innerhalb des Speichergehäuses angeordneten Sensoreinheit der Überwachungseinrichtung. Die Sensoreinheit erstellt Daten und sendet diese an das Batteriekontrollsystem.

Im Anschluss werden die Daten durch das Batteriekontrollsystem hinsichtlich des Vorliegens eines Auslöse- oder Nichtauslöseszenarios ausgewertet (Schritt 2). Das Batteriekontrollsystem wertet dabei die durch die Sensoreinheit gemessenen Parameter aus, indem es diese mit den zu erwartenden Parametern vergleicht.

Liegt eine Abweichung der Parameter vor und liegt diese außerhalb eines Toleranzbereichs, so wird ein Auslöseszenario durchgeführt (Schritt 3). Der Toleranzbereich ist abhängig von verschiedenen Faktoren, wie bspw. der Wahl des Detektors oder der Auslegung des Strahlengangs, und wird daher in Abhängigkeit der Bauweise des Batteriespeichers bzw. des Gassensors gewählt.

Anschließend wird die Dosiervorrichtung angesteuert, indem das Batteriekontrollsystem eine Förderpumpe aktiviert und die Förderpumpe das schaumbildende Additiv aus dem Vorratsbehälter entnimmt und einem Schaumverteiler, der innerhalb des Speichergehäuses angeordnet ist, zuführt (Schritt 4).

Im nächsten Schritt erzeugt der Schaumverteiler einen Schaum aus dem schaumbildenden Additiv durch das In-Kontakt-Bringen des schaumbildenden Additivs mit der Atmosphäre des Innenraums des Speichergehäuses (Schritt 5).

Im Anschluss wird der erzeugte Schaum innerhalb des Speichergehäuses freigesetzt (Schritt 6).

Danach kann wahlweise eine Wartezeit eingehalten werden (Schritt 7). Dies ist insbesondere von Vorteil, da man mit der Wartezeit dem Schaum und dem ausgetretenen Elektrolyten eine gewisse Reaktionszeit einräumt, in der eine Neutralisation stattfinden kann.

Nach Einhalten einer Wartezeit kann wahlweise eine Umlaufpumpe aktiviert werden (Schritt 8). Durch die Umlaufpumpe kann die im Speichergehäuse vorliegende Gasatmosphäre abgesaugt und über den Zumischer sowie den Schaumverteiler wieder dem Speichergehäuse zugeführt werden. Hierdurch kann die Gasatmosphäre im Innenraum umgewälzt werden. Auf diese Weise kann der austretende Elektrolyt, der sich in der Atmosphäre des Innenraums angereichert hat, auf effiziente Art und Weise mit dem freigesetzten Schaum in Kontakt gebracht werden. Vorzugsweise bleibt die Umlaufpumpe solange im Betrieb, bis die Sensoreinheit keinen Elektrolyten mehr im Innenraum detektiert.

## Patentansprüche

1. Batteriespeicher (10) mit einem Speichergehäuse (12) und wenigstens einer Batteriezelle (14), die in einem Innenraum (33) des Speichergehäuses (12) angeordnet ist und einen Elektrolyten auf Basis von Schwefeldioxid enthält, **dadurch gekennzeichnet, dass** der Batteriespeicher (10) eine Sicherheitsvorrichtung mit einer Dosiervorrichtung (32) aufweist, die ein schaumbildendes Additiv (16) umfasst und dazu eingerichtet ist, aus dem schaumbildenden Additiv (16) einen Schaum (35) zum Neutralisieren des Elektrolyten zu erzeugen und den Schaum (35) im Innenraum (33) des Speichergehäuses (12) freizusetzen, wobei beim Neutralisieren des Elektrolyten mit dem Schaum (35) Bestandteile des Elektrolyten chemisch neutralisiert werden.

2. Batteriespeicher (10) nach Anspruch 1, **dadurch gekennzeichnet, dass** das schaumbildende Additiv (16) in einer wässrigen Lösung vorliegt und die folgenden Komponenten umfasst:
a) mindestens ein Schaummittel ausgewählt aus der Gruppe bestehend aus ionogenen Tensiden, Saponinen und Eiweißstoffen sowie Kombinationen davon,
b) mindestens eine Base ausgewählt ist aus der Gruppe der bestehend aus Carbonaten, Hydrogencarbonaten, Oxiden und Hydroxiden sowie Kombinationen davon, und
c) wahlweise weitere Zusatzstoffe ausgewählt aus der Gruppe bestehend aus Erdalkalimetallchloriden, Flammschutzmittel, höhere Alkohole und Harnstoff sowie Kombinationen davon.

3. Batteriespeicher (10) nach einem der vorgehenden Ansprüche, **dadurch gekennzeichnet, dass** die Dosiervorrichtung (32) einen das schaumbildende Additiv (16) enthaltenden Vorratsbehälter (18) und eine mit dem Vorratsbehälter (18) verbundene Förderpumpe (22) aufweist, wobei die Förderpumpe (22) an einen im Innenraum (33) des Speichergehäuses (12) angeordneten Schaumverteiler (24) angeschlossen ist.

4. Batteriespeicher (10) nach Anspruch 3, **dadurch gekennzeichnet, dass** die Dosiervorrichtung (32) einen Zumischer (26) und eine Umlaufpumpe (28) umfasst, wobei der Zumischer (26) jeweils einen separaten Anschluss zum Schaumverteiler (24), der Förderpumpe (22) und der Umlaufpumpe (28) aufweist, und wobei die Umlaufpumpe (28) mit dem Innenraum (33) des Speichergehäuses (12) strömungsmäßig verbunden ist.

5. Batteriespeicher (10) nach einem der vorgehenden Ansprüche, **dadurch gekennzeichnet, dass** die Sicherheitsvorrichtung eine Überwachungseinrichtung (37) aufweist, wobei Überwachungseinrichtung (37) ein Batterie-Kontrollsystem (36) und eine mit dem Batterie-Kontrollsystem (36) verbundene Sensoreinheit (38) umfasst.

6. Batteriespeicher (10) nach Anspruch 5, **dadurch gekennzeichnet, dass** die Sensoreinheit (38) ausgewählt ist aus der Gruppe bestehend aus optischen Sensoren, Druck-, Temperatur- und Chemiesensoren, weiter bevorzugt, dass die Sensoreinheit ein spektroskopischer Gassensor (39) zum Detektieren von gasförmigen Schwefeldioxid ist.

7. Batteriespeicher (10) nach den Ansprüchen 5 oder 6, **dadurch gekennzeichnet, dass** die Sensoreinheit (38) dazu eingerichtet ist, ein Austreten des Elektrolyten aus einer Batteriezelle (14) zu erfassen, davon Daten zu erstellen und an das Batterie-Kontrollsystem (36) weiterzuleiten, wobei das Batterie-Kontrollsystem (36) dazu vorgesehen ist, Daten von der Sensoreinheit (38) zu erhalten und diese hinsichtlich eines Auslöse- oder Nichtauslöse-Szenarios auszuwerten.

8. Batteriespeicher (10) nach Anspruch 7, **dadurch gekennzeichnet, dass** das Batterie-Kontrollsystem (36) weiter dazu eingerichtet ist, bei Vorliegen eines Auslöse-Szenarios die Dosiervorrichtung (32) anzusteuern, sodass aus dem schaumbildenden Additiv (16) ein Schaum (35) erzeugt und im Innenraum (33) des Speichergehäuses (12) freigesetzt wird.

9. Batteriespeicher (10) nach Anspruch 8, **dadurch gekennzeichnet, dass** das Batterie-Kontrollsystem (36) weiter dazu eingerichtet ist, bei Vorliegen eines Auslöse-Szenarios die Dosiervorrichtung (32) zur Aktivierung der Umlaufpumpe (28) anzusteuern, die eine in im Speichergehäuse vorliegende Gasatmosphäre absaugt, und über den Zumischer und den Schaumverteiler dem Speichergehäuse wieder zuführt.

10. Verfahren zum Auslösen einer Sicherheitsvorrichtung für einen Batteriespeicher (10) nach Anspruch 8 oder 9, **dadurch gekennzeichnet, dass** das Verfahren die folgenden Schritte umfasst:
(a) Erkennen eines Austretens des Elektrolyten aus einer Batteriezelle (14) im Innenraum (33) des Speichergehäuses (12) durch die Sensoreinheit (38) der Überwachungseinrichtung (37), wobei davon Daten erstellt und an das Batterie-Kontrollsystem (36) weitergeleitet werden,
(b) Bewerten der Daten durch das Batterie-Kontrollsystem (36) hinsichtlich des Vorliegens eines Auslöse- oder Nichtauslöse-Szenarios,
(c) Erkennen eines Auslöse-Szenarios,
(d) Ansteuern der Dosiervorrichtung (32),
(e) Erzeugen eines Schaums (35) aus dem schaumbildenden Additiv (16),
(f) Freisetzen des Schaums (35) im Innenraum (33) des Speichergehäuses (12),
(g) wahlweise Einhalten einer Wartezeit, und
(h) wahlweise Aktivieren einer Umlaufpumpe (28), die eine im Innenraum (33) des Speichergehäuses (12) vorliegende Gasatmosphäre absaugt und über den Zumischer (26) und Schaumverteiler (24) dem Speichergehäuse (12) wieder zuführt.

## Claims

1. Battery storage device (10) with a storage housing (12) and at least one battery cell (14) which is arranged in an interior space (33) of the storage housing (12) and contains an electrolyte based on sulfur dioxide, **characterized in that** the battery storage device (10) has a safety device with a metering device (32) which comprises a foam-forming additive (16) and is configured to generate a foam (35) from the foam-forming additive (16) for neutralizing the electrolyte and to release the foam (35) in the interior space (33) of the storage housing (12), wherein during neutralizing of the electrolyte with the foam (35) constituents of the electrolyte are chemically neutralized.

2. Battery storage device (10) according to claim 1, **characterized in that** the foam-forming additive (16) is present in an aqueous solution and comprises the following components:
a) at least one foaming agent selected from the group consisting of ionic surfactants, saponins and protein substances as well as combinations thereof,
b) at least one base selected from the group consisting of carbonates, hydrogen carbonates, oxides and hydroxides as well as combinations thereof, and
c) optionally further additives selected from the group consisting of alkaline earth metal chlorides, flame retardants, higher alcohols and urea as well as combinations thereof.

3. Battery storage device (10) according to any one of the preceding claims, **characterized in that** the metering device (32) has a storage container (18) containing the foam-forming additive (16) and a feed pump (22) connected to the storage container (18), wherein the feed pump (22) is connected to a foam distributor (24) arranged in the interior space (33) of the storage housing (12).

4. Battery storage device (10) according to claim 3, **characterized in that** the metering device (32) comprises a mixer (26) and a circulation pump (28), wherein the mixer (26) has in each case a separate connection to the foam distributor (24), the feed pump (22) and the circulation pump (28), and wherein the circulation pump (28) is connected in terms of flow to the interior space (33) of the storage housing (12).

5. Battery storage device (10) according to any one of the preceding claims, **characterized in that** the safety device has a monitoring device (37), wherein the monitoring device (37) comprises a battery control system (36) and a sensor unit (38) connected to the battery control system (36).

6. Battery storage device (10) according to claim 5, **characterized in that** the sensor unit (38) is selected from the group consisting of optical sensors, pressure, temperature and chemical sensors, more preferably that the sensor unit is a spectroscopic gas sensor (39) for detecting gaseous sulfur dioxide.

7. Battery storage device (10) according to claims 5 or 6, **characterized in that** the sensor unit (38) is configured to detect an escape of the electrolyte from a battery cell (14), to generate data therefrom and to forward it to the battery control system (36), wherein the battery control system (36) is provided to receive data from the sensor unit (38) and to evaluate it with regard to a triggering or non-triggering scenario.

8. Battery storage device (10) according to claim 7, **characterized in that** the battery control system (36) is further configured to control the metering device (32) when a triggering scenario is present, so that a foam (35) is generated from the foam-forming additive (16) and released in the interior space (33) of the storage housing (12).

9. Battery storage device (10) according to claim 8, **characterized in that** the battery control system (36) is further configured to control the metering device (32) for activating the circulation pump (28) when a triggering scenario is present, which suctions a gas atmosphere present in the storage housing, and returns it to the storage housing via the mixer and the foam distributor.

10. Method for triggering a safety device for a battery storage device (10) according to claim 8 or 9, **characterized in that** the method comprises the following steps:
(a) detecting an escape of the electrolyte from a battery cell (14) in the interior space (33) of the storage housing (12) by the sensor unit (38) of the monitoring device (37), wherein data is generated therefrom and forwarded to the battery control system (36),
(b) evaluating the data by the battery control system (36) with regard to the presence of a triggering or non-triggering scenario,
(c) detecting a triggering scenario,
(d) controlling the metering device (32),
(e) generating a foam (35) from the foam-forming additive (16),
(f) releasing the foam (35) in the interior space (33) of the storage housing (12),
(g) optionally maintaining a waiting time, and
(h) optionally activating a circulation pump (28) which suctions a gas atmosphere present in the interior space (33) of the storage housing (12) and returns it to the storage housing (12) via the mixer (26) and foam distributor (24).

## Revendications

1. Dispositif de stockage par batterie (10) avec un boîtier de stockage (12) et au moins une cellule de batterie (14) qui est disposée dans un espace intérieur (33) du boîtier de stockage (12) et contient un électrolyte à base de dioxyde de soufre, **caractérisé en ce que** le dispositif de stockage par batterie (10) présente un dispositif de sécurité avec un dispositif de dosage (32) qui comprend un additif moussant (16) et est conçu pour générer une mousse (35) à partir de l'additif moussant (16) pour neutraliser l'électrolyte et pour libérer la mousse (35) dans l'espace intérieur (33) du boîtier de stockage (12), lors de la neutralisation de l'électrolyte avec la mousse (35) des constituants de l'électrolyte étant neutralisés chimiquement.

2. Dispositif de stockage par batterie (10) selon la revendication 1, **caractérisé en ce que** l'additif moussant (16) est présent dans une solution aqueuse et comprend les composants suivants :
a) au moins un agent moussant choisi dans le groupe constitué de tensioactifs ioniques, de saponines et de substances protéiques ainsi que de combinaisons de ceux-ci,
b) au moins une base choisie dans le groupe constitué de carbonates, d'hydrogénocarbonates, d'oxydes et d'hydroxydes ainsi que de combinaisons de ceux-ci, et
c) éventuellement d'autres additifs choisis dans le groupe constitué de chlorures de métaux alcalino-terreux, d'agents ignifuges, d'alcools supérieurs et d'urée ainsi que de combinaisons de ceux-ci.

3. Dispositif de stockage par batterie (10) selon l'une quelconque des revendications précédentes, **caractérisé en ce que** le dispositif de dosage (32) présente un récipient de stockage (18) contenant l'additif moussant (16) et une pompe d'alimentation (22) reliée au récipient de stockage (18), la pompe d'alimentation (22) étant raccordée à un distributeur de mousse (24) disposé dans l'espace intérieur (33) du boîtier de stockage (12).

4. Dispositif de stockage par batterie (10) selon la revendication 3, **caractérisé en ce que** le dispositif de dosage (32) comprend un mélangeur (26) et une pompe de circulation (28), le mélangeur (26) présentant dans chaque cas un raccordement séparé au distributeur de mousse (24), à la pompe d'alimentation (22) et à la pompe de circulation (28), et la pompe de circulation (28) étant reliée en termes d'écoulement à l'espace intérieur (33) du boîtier de stockage (12).

5. Dispositif de stockage par batterie (10) selon l'une quelconque des revendications précédentes, **caractérisé en ce que** le dispositif de sécurité présente un dispositif de surveillance (37), le dispositif de surveillance (37) comprenant un système de contrôle de batterie (36) et une unité de capteur (38) reliée au système de contrôle de batterie (36).

6. Dispositif de stockage par batterie (10) selon la revendication 5, **caractérisé en ce que** l'unité de capteur (38) est choisie dans le groupe constitué de capteurs optiques, de capteurs de pression, de température et chimiques, plus préférablement que l'unité de capteur est un capteur de gaz spectroscopique (39) pour détecter le dioxyde de soufre gazeux.

7. Dispositif de stockage par batterie (10) selon les revendications 5 ou 6, **caractérisé en ce que** l'unité de capteur (38) est conçue pour détecter une fuite de l'électrolyte à partir d'une cellule de batterie (14), pour en générer des données et pour les transmettre au système de contrôle de batterie (36), le système de contrôle de batterie (36) étant prévu pour recevoir des données de l'unité de capteur (38) et pour les évaluer en ce qui concerne un scénario de déclenchement ou de non-déclenchement.

8. Dispositif de stockage par batterie (10) selon la revendication 7, **caractérisé en ce que** le système de contrôle de batterie (36) est en outre conçu pour commander le dispositif de dosage (32) lorsqu'un scénario de déclenchement est présent, de sorte qu'une mousse (35) est générée à partir de l'additif moussant (16) et libérée dans l'espace intérieur (33) du boîtier de stockage (12).

9. Dispositif de stockage par batterie (10) selon la revendication 8, **caractérisé en ce que** le système de contrôle de batterie (36) est en outre conçu pour commander le dispositif de dosage (32) pour activer la pompe de circulation (28) lorsqu'un scénario de déclenchement est présent, qui aspire une atmosphère gazeuse présente dans le boîtier de stockage, et la renvoie au boîtier de stockage via le mélangeur et le distributeur de mousse.

10. Procédé pour déclencher un dispositif de sécurité pour un dispositif de stockage par batterie (10) selon la revendication 8 ou 9, **caractérisé en ce que** le procédé comprend les étapes suivantes :
(a) détecter une fuite de l'électrolyte à partir d'une cellule de batterie (14) dans l'espace intérieur (33) du boîtier de stockage (12) par l'unité de capteur (38) du dispositif de surveillance (37), des données en étant générées et transmises au système de contrôle de batterie (36),
(b) évaluer les données par le système de contrôle de batterie (36) en ce qui concerne la présence d'un scénario de déclenchement ou de non-déclenchement,
(c) détecter un scénario de déclenchement,
(d) commander le dispositif de dosage (32),
(e) générer une mousse (35) à partir de l'additif moussant (16),
(f) libérer la mousse (35) dans l'espace intérieur (33) du boîtier de stockage (12),
(g) éventuellement observer un temps d'attente, et
(h) éventuellement activer une pompe de circulation (28) qui aspire une atmosphère gazeuse présente dans l'espace intérieur (33) du boîtier de stockage (12) et la renvoie au boîtier de stockage (12) via le mélangeur (26) et le distributeur de mousse (24).
